(19) Europäisches Patentamt
European Patent Office
Office européen des brevets

(11) **EP 2 126 518 B1**

## (12) FASCICULE DE BREVET EUROPEEN

(45) Date de publication et mention
de la délivrance du brevet:
**09.09.2015 Bulletin 2015/37**

(21) Numéro de dépôt: **08717198.9**

(22) Date de dépôt: **27.02.2008**

(51) Int Cl.:
***G01D 5/353*** *(2006.01)*  ***G01H 9/00*** *(2006.01)*

(86) Numéro de dépôt international:
**PCT/EP2008/052393**

(87) Numéro de publication internationale:
**WO 2008/107355 (12.09.2008 Gazette 2008/37)**

(54) **CAPTEUR DE GRANDEURS PHYSIQUES A FIBRE OPTIQUE INSENSIBLE AUX GRANDEURS STATIQUES**

SENSOR FÜR PHYSIKALISCHE GRÖSSEN MIT GEGENÜBER STATISCHEN WERTEN UNEMPFINDLICHER OPTISCHER FASER

PHYSICAL VALUE SENSOR COMPRISING AN OPTICAL FIBRE THAT IS NOT SENSITIVE TO STATIC VALUES

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **28.02.2007 FR 0701454**

(43) Date de publication de la demande:
**02.12.2009 Bulletin 2009/49**

(73) Titulaire: **THALES**
**92200 Neuilly-sur-Seine (FR)**

(72) Inventeurs:
 • **MOLIN, Stéphanie**
 **F-91210 Draveil (FR)**
 • **DOLFI, Daniel**
 **F-91400 Orsay (FR)**
 • **HUIGNARD, Jean-Pierre**
 **F-75013 Paris (FR)**
 • **DOISY, Martine**
 **F-06130 Plascassier (FR)**

(74) Mandataire: **Esselin, Sophie et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**WO-A-99/28713**

• HILL D J ET AL: "A fiber laser hydrophone array" PROCEEDINGS OF THE SPIE, SPIE, BELLINGHAM, VA, US, vol. 3860, septembre 1999 (1999-09), pages 55-66, XP003013226 ISSN: 0277-786X cité dans la demande
• FISCHER B ET AL: "NONLINEAR WAVE MIXING AND INDUCED GRATINGS IN ERBIUM-DOPED FIBER AMPLIFIERS" OPTICS LETTERS, OSA, OPTICAL SOCIETY OF AMERICA, WASHINGTON, DC, US, vol. 18, no. 24, 15 décembre 1993 (1993-12-15), pages 2108-2110, XP002027113 ISSN: 0146-9592 cité dans la demande
• BAGNOLI P E ET AL: "Development of an erbium-doped fibre laser as a deep-sea hydrophone" JOURNAL OF OPTICS. A, PURE AND APPLIED OPTICS, INSTITUTE OF PHYSICS PUBLISHING, BRISTOL,, GB, vol. 8, no. 7, 1 juillet 2006 (2006-07-01), pages S535-S539, XP020108522 ISSN: 1464-4258 cité dans la demande
• KERSEY A D ET AL: "FIBER GRATING SENSORS" JOURNAL OF LIGHTWAVE TECHNOLOGY, IEEE SERVICE CENTER, NEW YORK, NY, US, vol. 15, no. 8, août 1997 (1997-08), pages 1442-1462, XP000720469 ISSN: 0733-8724 cité dans la demande

**Description**

La présente invention se rapporte à un capteur de grandeurs physiques à fibre optique dynamique, c'est-à-dire insensible aux grandeurs statiques, notamment aux grandeurs statiques relatives à la grandeur physique à mesurer.

On notera que tous les chiffres de renvoi écrits entre crochets dans le corps de la présente description se rapportent à la liste de références figurant à la fin de cette description.

Une application possible de tels capteurs est l'hydrophone à fibre optique. Les systèmes existants les plus performants reposent sur l'utilisation de lasers à fibre à contre-réaction répartie [9], [19], et ils sont utilisés dans des architectures complexes mettant en oeuvre des dispositifs d'interrogation interférométriques [20], [21].

Les deux défauts principaux sont :

- la forte sensibilité de ces capteurs à la pression statique et à la température,
- la complexité des systèmes d'interrogation.

Les capteurs à base de fibres optiques sont étudiés depuis près de trente ans [1]. Ces capteurs bénéficient des avantages des fibres optiques, qui, outre leurs faibles poids, encombrement, coût et insensibilité aux perturbations électromagnétiques, présentent de faibles pertes, une bande passante élevée et sont propices aux techniques de multiplexage et à la mise en oeuvre d'amplificateurs ou de capteurs distribués.

Les applications des capteurs à fibre optique sont diverses [2]. Les plus fréquentes concernent la détection de contraintes, de température et de pression, mais elles existent aussi en détection de courant/tension, de champ magnétique, de déplacement, de torsion, d'accélération, de gaz, etc. Les techniques utilisées sont très variées également, les plus activement étudiées sont les gyroscopes à fibre [3], les autres méthodes interférométriques [4], les techniques de rétro-diffusion (Raman, Brillouin ou Rayleigh) [5]. Près de la moitié des capteurs fibrés actuellement à l'étude mettent en oeuvre des réseaux de Bragg [6]. En particulier, l'utilisation de capteurs actifs (lasers) à base de réseaux de Bragg se répand : il s'agit de lasers DBR (« Distributed Bragg Reflector », c'est-à-dire à réflecteur de Bragg réparti) [7] ou DFB (Distributed FeedBack, c'est-à-dire à contre-réaction répartie) [8], [9] dont la pureté spectrale permet un gain important en termes de sensibilité par rapport à des dispositifs à réseaux de Bragg passifs.

Dans le cas des hydrophones à fibre à réseau de Bragg, la grandeur effectivement mesurée par le système est la déformation axiale de l'élément à fibre à réseau de Bragg induite par l'onde de pression. Pour les applications relatives à l'hydrophone pour la détection sous-marine, le faible niveau de pression que l'on cherche à détecter (niveau de bruit de «mer 0 » selon l'échelle de Knudsen) nécessite en général un dispositif mécanique autour de cet élément à fibre qui est conçu pour amplifier la fonction de transfert entre la pression extérieure et la déformation axiale de la fibre. L'ordre de grandeur des déformations à mesurer dans ce cas se situe entre $10^{-9}$ (« nanostrain ») et $10^{-12}$ (« picostrain »). La déformation sur le capteur induit un déphasage sur l'onde optique qui s'y propage, ce qui se traduit dans le cas d'une cavité active à réseau de Bragg (Laser DFB ou DBR) par une variation de la fréquence optique du laser. La mesure de ce déphasage ou de cette variation de fréquence nécessite la comparaison de la fréquence du signal utile avec celle d'un signal de référence. Parmi les méthodes utilisées, on distingue principalement deux solutions pour obtenir une onde de référence. La première solution (type hétérodyne) consiste à utiliser une onde de référence provenant d'un tiers capteur, similaire, mais isolé de la perturbation [10]. La deuxième solution (type « self-homodyne ») consiste à séparer le signal utile en deux bras de chemins optiques très différents et à réaliser des interférences entre ces deux bras. Dans ce cas, l'onde de référence est une copie retardée de l'onde signal [11].

Une des limitations des systèmes actuels d'hydrophones à laser à fibre est l'influence de la pression statique sur le fonctionnement laser: sous la pression de l'eau soit les cavités n'émettent plus, soit leur longueurs d'onde d'émission sont modifiées au point d'altérer le fonctionnement du système. En effet, la pression de l'eau croît d'environ 1 bar tous les 10 m. Or, ces systèmes sont destinés à des utilisations à grande immersion, c'est-à-dire à des profondeurs de l'ordre de 100 à 800 m. La pression statique modifie la longueur de la cavité laser et provoque une translation d'autant plus importante de la longueur d'onde d'émission que le capteur a été conçu pour être sensible à de très faibles niveaux de pression dynamique (environ 3 nm à 400 m de profondeur dans le cas d'un hydrophone optimisé pour la détection sous-marine). Dans le cas d'architectures multiplexées en longueur d'onde par exemple, la pression statique est une limite directe de l'espacement entre deux longueurs d'onde, et réduit par conséquent le nombre maximal de capteurs qu'il est possible de disposer en série sur une seule fibre. Des solutions existent pour pallier ce problème. Il est possible soit de mesurer la pression statique, puis d'en tenir compte lors du traitement des données, soit de la compenser. La première méthode est lourde et limite la sensibilité du système. La seconde méthode nécessite des dispositifs mécaniques et/ou piézoélectriques élaborés pour filtrer, au niveau du dispositif d'amplification mécanique des déformations, la partie très basse fréquence.

La présente invention a pour objet un capteur de grandeurs physiques à fibre optique qui soit insensible intrinsèquement aux déformations statiques de la fibre optique, sans nécessiter d'interféromètre ou de capteur de référence, permettant d'obtenir au moins le même niveau de performances, en termes de sensibilité, que les capteurs connus de ce type, et en particulier les hydrophones connus, tout en simplifiant notablement le système d'interrogation. On notera que ces hydrophones connus sont par exemple des hydrophones australiens ou suédois à base de laser fibré DFB [12], [13], [14].

Le capteur conforme à l'invention est un capteur de grandeurs physiques à guide d'ondes optique à milieu amplificateur pompé optiquement, et il est caractérisé en ce que ce guide d'ondes est relié à une extrémité à un miroir sélectif et qu'il comporte à son autre extrémité un laser d'interrogation dont la réflexion sur le miroir sélectif produit une onde qui, par interférence avec l'onde incidente, provoque la saturation périodique du gain du guide.

**[0011]** - Le capteur laser à contre-réaction répartie dynamique conforme à l'invention est intrinsèquement insensible à la pression statique. Le réseau de Bragg n'est pas préalablement photo-inscrit dans la fibre, mais au contraire inscrit de façon dynamique par l'onde sonde, en mettant en oeuvre un effet optique non linéaire simple et bien connu en soi: le mélange à deux ondes par saturation du gain. Dans ce cas, quelle que soit la longueur physique de la cavité, l'onde sonde inscrit un réseau de gain dont le pas est parfaitement adapté à sa propre diffraction. Un tel capteur actif, interrogé par une onde sonde est une solution pour s'affranchir de bancs interférométriques ou de capteur additionnel. La mesure de contraintes est directement obtenue par battement entre l'onde laser et l'onde sonde, sans nécessiter interféromètre ou capteur de référence.

La solution de l'invention repose sur l'utilisation d'un laser à fibre à contre-réaction répartie dynamique. Ce capteur est insensible à la pression statique et ne nécessite pas la mise en oeuvre d'interféromètre. Les autres avantages sont la facilité de mise en oeuvre et de réalisation (pas de réseau de Bragg photo-inscrit).

La présente invention sera mieux comprise à la lecture de la description détaillée d'un mode de réalisation, pris à titre d'exemple non limitatif et illustré par le dessin annexé, sur lequel :

- la figure 1 est une vue schématique en coupe d'un capteur à fibre optique à contre-réaction distribuée conforme à l'invention,
- la figure 2 est un schéma explicatif du principe physique mis en oeuvre par la présente invention,
- la figure 3 est un bloc-diagramme d'un hydrophone utilisant un capteur conforme à l'invention, et
- la figure 4 est un schéma d'une variante du capteur de la figure 1, muni d'un miroir d'entrée partiellement réfléchissant.

Le capteur de l'invention comporte essentiellement un composant laser fibré à DFB dynamique interrogé par une onde laser sonde. Les guides constituant ce laser peuvent être monoréfringents ou biréfringents.

Le capteur de l'invention est décrit ci-dessous en référence à des fibres optiques ou des guides d'ondes optiques constituant son composant sensible à des pressions qui agissent sur ses propriétés optiques en exerçant une déformation axiale sur ces fibres ou guides, mais il est bien entendu que toute autre grandeur physique capable de provoquer une déformation axiale (par exemple l'emploi d'une gaine magnétostrictive transforme ce capteur en magnétomètre...) de ces fibres ou guides peuvent être mesurées par ce capteur.

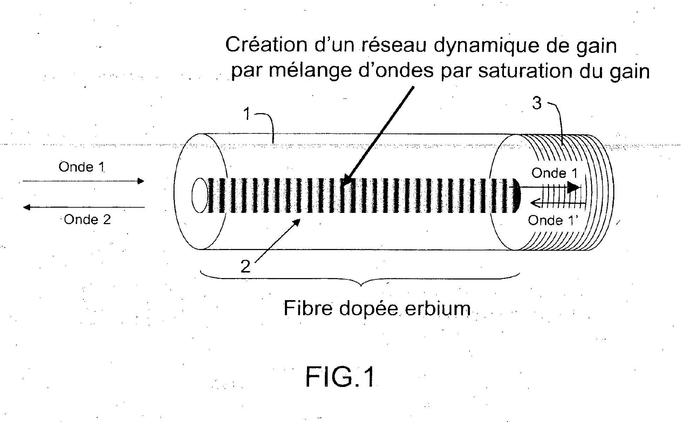

Comme l'illustre la figure 1, le capteur à DBF dynamique de l'invention comporte un milieu à gain qui est un tronçon de fibre amplificatrice 1, dans lequel est provoqué un mélange à deux ondes 2 [15]-[18], le tronçon 1 étant suivi d'un miroir de Bragg court 3 et donc relativement sélectif. Les deux ondes interférant dans le milieu à gain sont l'onde « onde 1 » à la fréquence $\nu_1$ et l'onde « onde 1' », qui est obtenue par réflexion de l'onde 1 sur le miroir 3 qui peut être soit un miroir de Bragg, soit un miroir diélectrique. La diffraction de l'onde 1 sur le réseau de gain ainsi créé donne naissance à l'onde « onde 2 ».

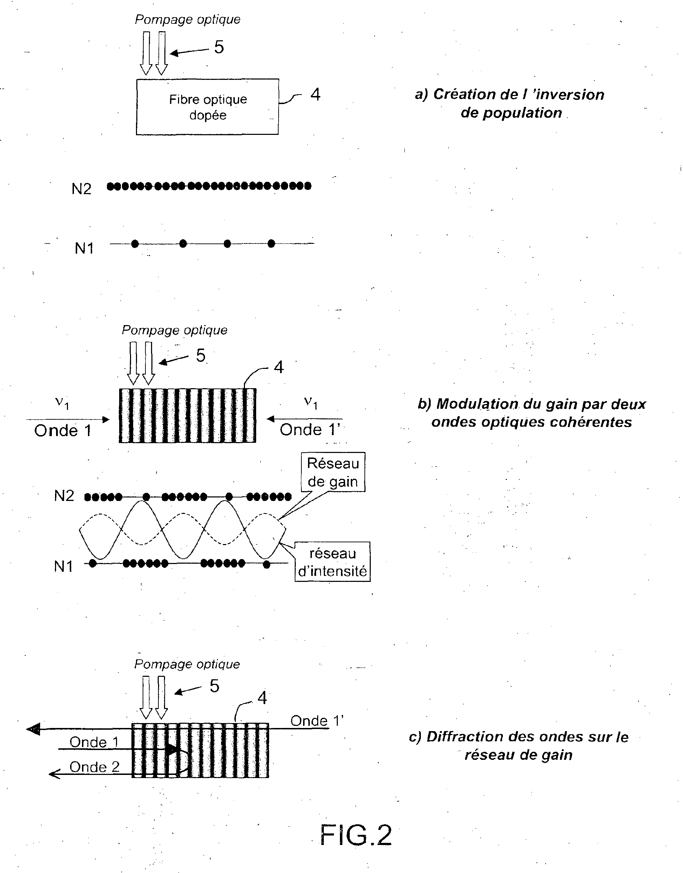

On a détaillé sur la figure 2, en trois étapes notées a, b et c, le processus physique de mélange à deux ondes dans un milieu amplificateur 4. Le milieu amplificateur est donc ici une fibre optique dopée préalablement et pompée optiquement (5) pour atteindre l'inversion de population entre ses niveaux d'énergie, notés N1 et N2 (étape a). Considérons (étape b) deux ondes optiques de même fréquence $\nu_1 = \dfrac{c}{\lambda_1}$ (où c et $\lambda_1$ représentent respectivement la vitesse de la lumière et la longueur d'onde dans le vide), de même état de polarisation, cohérentes entre elles, et de longueur de cohérence $L_{coh}$ au moins égale à la longueur L de la fibre. Ces deux ondes (notées onde 1 et onde 1') sont injectées dans le milieu amplificateur en sens opposés et y interfèrent. Il en résulte une variation spatiale périodique de l'intensité totale de l'onde à la fréquence $\nu_1$ dans le milieu, qui conduit à une saturation périodique (au niveau des franges brillantes) du gain dans le milieu amplificateur. Le réseau de gain et/ou d'indice ainsi généré permet la diffraction et le couplage des deux ondes qui l'ont créé. Ainsi (étape c), l'onde 1 se diffracte sur le réseau de gain qu'elle a inscrit par interférence avec l'onde 1' pour donner une onde diffractée, onde 2, se propageant dans le même sens que l'onde 1'. Le pas du réseau de gain vaut $\Lambda = \dfrac{\lambda_1}{2n_e} = \dfrac{c}{2n_e \nu_1}$ (où $n_e$ représente l'indice effectif du milieu amplificateur).

La durée de vie du réseau de gain ainsi créé détermine la fréquence de coupure basse du capteur. Dans le cas classique où le dopant (terre rare) de la fibre amplificatrice est l'ion erbium, la durée de vie de l'état excité est de l'ordre de 1 à 10 ms selon l'état de saturation du milieu. Le capteur de l'invention possède alors une fréquence de coupure basse de l'ordre de 100 Hz à 1 kHz. Pour les perturbations lentes (variations de phase de l'onde incidente, variations locales de température ou de pression statique), le réseau s'adapte automatiquement. Pour les perturbations de fréquences plus élevées (onde acoustique à détecter), le capteur se comporte comme un réseau de Bragg fixe classique dont la déformation axiale module la réflectivité. Le décalage $\Delta\lambda_B$ de la longueur d'onde de Bragg d'un tel capteur est :

$$\Delta\lambda_B = 2n_e\Lambda\varepsilon_z - 2n_e\Lambda\left[\frac{n_e^2}{2}\left((p_{11} + p_{12})\varepsilon_r + p_{12}\varepsilon_z\right)\right]$$

dans cette équation :

$\varepsilon_z$ et $\varepsilon_r$ sont les déformations longitudinales et radiales ($\varepsilon_r = \varepsilon_z$ dans l'hypothèse isotrope)
$n_e$ est l'indice de réfraction effectif de la fibre
$\Lambda = \lambda_B/2n_e$ est le pas du réseau de Bragg
$p_{11}$ et $p_{12}$ sont les coefficients élasto-optiques transverse et longitudinal de la fibre.

Cette équation permet d'évaluer la sensibilité du capteur : le décalage en longueur d'onde pour une pression appliquée de 1 Pa est de l'ordre de $-3,6.10^{-9}$nm. (Avec pour la silice $n_e = 1,456$ ; $p_{11} = 0,121$ ; $p_{12} = 0,265$).
Pour ce calcul, la valeur de déformation est prise égale à $\varepsilon_z = -0,75.10^{-15}$ et calculée de la façon suivante :

$$\varepsilon_z = (2\vartheta - 1)P/E ,$$

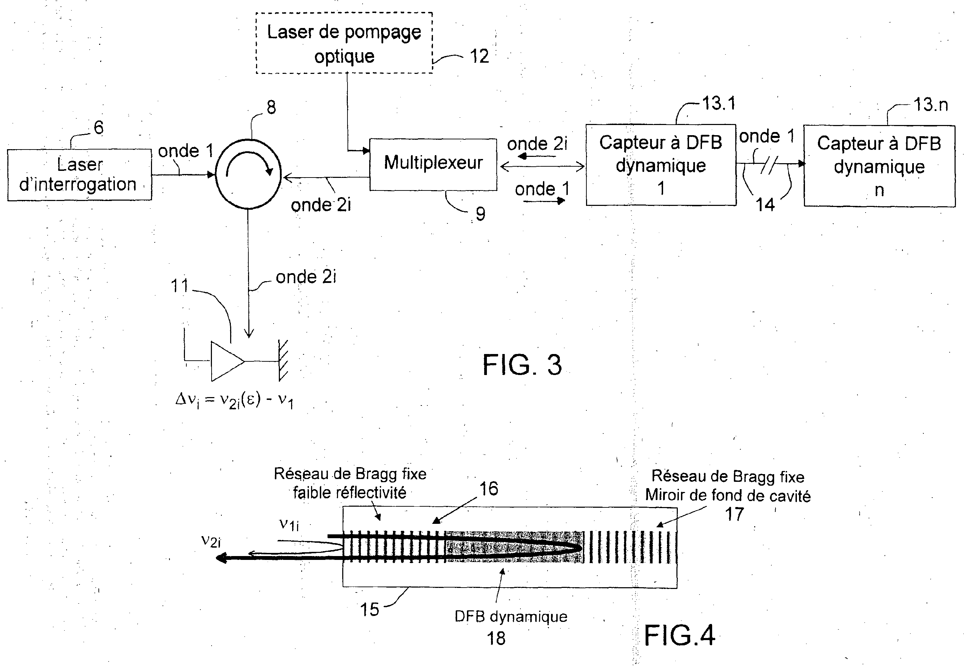

où $E$ est le module d'Young et $\vartheta$ le coefficient de Poisson (pour la silice $E = 72.10^9$ Pa et $\vartheta = 0,23$).
La sensibilité de l'hydrophone doit permettre de détecter le niveau de bruit de mer 0 (Echelle de Knudsen) à savoir 100 µPa/ $\sqrt{Hz}$ à 1 kHz, soit une déformation $\varepsilon_z = -0,75.10^{-15}$ /(rac(Hz)) à 1 kHz. sur une fibre optique nue. Avec un dispositif mécanique autour de l'élément sensible de la fibre, il est connu qu'il est possible d'amplifier cette déformation d'un facteur 30 à 60 dB et donc de ramener le niveau de bruit de mer 0 à détecter à un niveau de déformation dynamique supérieure au « picostrain ».($10^{-12}$).
Il apparaît que ce dispositif peut donc être utilisé comme capteur de déformation axiale dans les systèmes d'hydrophones à fibre, avec une sensibilité au moins équivalente à celle des capteurs existants, et avec les avantages d'insensibilité à la pression statique et de simplification des architectures d'interrogation.
On a illustré en figure 3 un exemple de réalisation d'un hydrophone à fibre qui est considérablement simplifié par rapport aux hydrophones connus, et qui comprend essentiellement : un laser d'interrogation 6 dont le faisceau est envoyé via un circulateur 8 à l'entrée d'un multiplexeur en longueur d'onde 9. Ce laser d'interrogation est soit un laser émettant n longueurs d'ondes $\lambda_i$ ou bien un laser accordable permettant de balayer toute la plage de longueurs d'onde de fonctionnement des n capteurs. L'onde de sortie du circulateur (provenant de la série de capteurs), est envoyée à une diode de détection 11. L'énergie d'une diode laser de pompage optique 12 à 980 nm par exemple, est injectée, via le multiplexeur 9, vers le ou les capteurs (n capteurs référencés de 13.1 à 13.n) placés en série sur une fibre optique 14, afin de réaliser l'inversion de population. Le signal issu du capteur i et noté par sa fréquence optique $\nu_{2i}$ se propage (dans cet exemple) dans le sens opposé à celui de la pompe 12.L'onde de fréquence optique $\nu_{2i}$ bat avec l'onde sonde de fréquence optique $\nu_{1i}$ issue de la réflexion du laser d'interrogation 6 directement sur le miroir fixe de fond de cavité du capteur. Après traversée du multiplexeur et du circulateur, les deux fréquences optiques $\nu_{1i}$ et $\nu_{2i}(\varepsilon)$ donnent lieu à un battement sur le détecteur 11 à la fréquence $\Delta\nu_i(\varepsilon) = \nu_{1i} - \nu_{2i}(\varepsilon)$. La valeur de $\Delta\nu_i$ est fonction de la contrainte $\varepsilon$ vue par le capteur i. Ainsi, dans le cas d'une modulation périodique $\Delta\Phi$ de la phase du réseau dynamique DFB, $\Delta\Phi = \Delta\Phi_i$ $\cos(\Omega t)$, il en résulte au retour une onde diffractée par le DFB dynamique dont l'amplitude du champ s'exprime par :

$$\xi_{2i} = \xi_{1i} \exp(j\omega_i t)\exp(\Delta\Phi_i \cos(\Omega t))$$

La fréquence $\nu_{2i}$ de l'onde 2i vaut dans ces conditions :

$$\nu_{2i} = \nu_{1i} + \frac{1}{2\pi}\frac{\partial \Delta\Phi}{\partial t} = \nu_{1i} - \Delta\Phi_i \Omega \sin(\Omega t),$$

ce qui correspond à un signal de modulation après détection par battement avec la fréquence $\nu_i$ du signal à la fréquence $\Omega$. Quelle que soit la nature du miroir de fond de cavité des capteurs (Bragg ou diélectrique), sa largeur spectrale de réflexion $\Delta\lambda_i$ doit être suffisante pour assurer la réflexion à $\lambda_i$ dans les conditions d'utilisation du capteur (en tenant compte des contraintes de température, pression ...). Notons que dans certains cas (dépendant de la position de la longueur d'onde de fonctionnement du capteur par rapport à la longueur d'onde de résonance du milieu amplificateur), une modulation spatiale de l'indice se superpose à la modulation spatiale du gain et peut contribuer à renforcer l'effet de modulation de phase due à l'onde acoustique.

Une variante du capteur de l'invention décrit ci-dessus a été représentée en figure 4. Dans ce capteur 15, l'onde incidente est réfléchie partiellement par un réseau de Bragg de faible réflectivité 16 formé à une des extrémités du capteur 15, cette extrémité étant l'extrémité qui, à la fois, reçoit l'onde d'interrogation (onde 1) et par laquelle sort l'onde de sortie du capteur (onde 2). Un autre réseau de Bragg fixe 17 à forte réflectivité est formé à l'autre extrémité du capteur 15. Comme dans le cas des capteurs décrits ci-dessus, il se forme un DFB dynamique 18 dans le capteur 15 entre les deux réseaux de Bragg fixes. Le détecteur reçoit alors le battement entre la réflexion de l'onde 1 sur le miroir 16 et l'onde 2. Notons que selon les principes des figures 2 et 4, le signal détecté n'est pas affecté par les fluctuations de la distance source/capteur, ni par la pression hydrostatique.

L'invention a été décrite ci-dessus en référence à un exemple utilisant une fibre amplificatrice dopée erbium. Notons que cette fibre peut être remplacée par tout autre type de fibre amplificatrice. En effet, le mélange à deux ondes pour la réalisation d'un capteur à DFB dynamique peut être envisagé, de manière plus générale, au sein de toute fibre dopée par des ions de terre rare. De telles fibres se trouvent dans le commerce, elles sont dopées ytterbium, néodyme, samarium ou thulium, ou encore co-dopées erbium-ytterbium, thulium-holmium ou erbium-ytterbium. Bien sûr, les longueurs d'onde d'absorption (déterminant celles du pompage optique) et d'émission laser varient selon l'amplificateur utilisé. De plus, la concentration du dopant utilisé détermine la forme et la largeur du profil de gain de l'amplificateur. Ainsi par exemple, une fibre dopée erbium est souvent dopée plus exactement $Ge/SiO_2$: Er, mais un dopage $Al/P/SiO_2$: Er permet d'obtenir un spectre de gain d'autant plus large et plat que la concentration en aluminium est élevée.

Dans l'exemple de réalisation décrit ci-dessus, le pompage optique est effectué par une diode laser à 980 nm. D'autres lasers de pompe seraient utilisés dans le cas d'un dopage de la fibre amplificatrice par un ion terre-rare différent de l'erbium. Notons que même dans le cas d'une fibre dopée erbium, il est envisageable d'utiliser d'autres transitions d'absorption (autour de 810 nm ou de 1480 nm). Cependant 980 nm et 1480 nm sont les deux longueurs d'onde les mieux adaptées : des diodes lasers à semi-conducteur sont disponibles à ces longueurs d'onde (en AlGaAs pour 980 nm et en InGaAsP pour 1480 nm). Par ailleurs, les propriétés des amplificateurs à fibre dopée erbium peuvent être transposées au cas de la présente invention : un pompage à 980 nm permet une inversion de population quasi totale et un rapport signal sur bruit optimum, alors qu'un pompage à 1480 nm permet des puissances de pompage et de saturation plus élevées (donc plus de gain) ainsi qu'un déport plus longue distance (des distances de l'ordre de 10 km à 50 km sont envisageables) car les pertes d'absorption des fibres classiques sont moindres.

Selon une autre variante de l'invention, le mélange à deux ondes est réalisé par saturation du gain non plus dans une fibre amplificatrice, mais dans un guide amplificateur (EDWA, par exemple, pour Erbium Doped Waveguide Amplifier). Le principe du capteur reste tout à fait identique, c'est-à-dire qu'il est également le siège d'un réseau dynamique de gain par mélange d'ondes et saturation de son gain.

L'exemple de la figure 3 montre une architecture à plusieurs capteurs montés en série et multiplexés en longueur d'onde. Ce type de capteurs en série peut également être interrogé par des méthodes de démultiplexage en temps, ou encore par des méthodes hybrides TDW / WDM (démultiplexage en temps et en longueur d'onde).

## REFERENCES

[1] C. Menadier, C.Kissenger, et H. Adkins, "The photonic sensor", Instrum. Control Syst. Vol.40, 114 (1967)

[2] B. Culshaw, "Optical fiber sensor technologies : opportunities and-perhaps-pitfalls", J. Ligth. Tech. Vol. 22, No. 1, 39 (2004).

[3] V. Vali et R. W. Shorthill, "Fiber ring interferometer", Appl. Opt. Vol.15, No. 5, 1099 (1976).

[4] P. Nash, "Review of interferometric optical fiber hydrophone technology", IEE Proc. Radar Sonar Navig. Vol.

143, No. 3 (1996).

[5] L. Thévenaz et al., "Monitoring of large structures using distributed Brillouin fiber sensing", proceedings of the 13th international conf on optical fiber sensors (OFS-13), Korea, SPIE Vol. 3746, 345 (1999).

[6] S.W. James et al. « Simultaneous independent temperature and strain measurement using in-fiber Bragg grating sensors », Elect. Lett. 32 (12) 1133 (1996).

[7] A. D. Kersey et al., « Fiber Grating Sensors », J. Light. Techn. Vol. 15, No. 8 (1997).

[8] D.J. Hill et al., "DFB fibre-laser sensor developments", OFS-17 Proc. SPIE Vol. 5855 p.904.

[9] U.S. patent 5,844,927 "Optical Fiber Distributed FeedBack Laser" (1998).

[10] C. Sun et al., "Serially multiplexed dual-point fiber-optic acoustic emission sensor", J. Light. Techn. Vol. 22, No. 2 (2004).

[11] S. Abad et al., "Interrogation of wavelength multiplexed fiber bragg gratings using spectrale filtering and amplitude-to-phase optical conversion", J. of Ligth. Techn. Vol. 21, No. 1 (2003).

[12] P.E. Bagnoli et al., « Development of an erbium-doped fibre laser as a deep-sea hydrophone », J. of Optics A : Pure Appl. Opt. 8 (2006).

[13] D.J. Hill et al., "A fiber laser hydroplione array", SPIE Conf on Fiber Optic Sensor Technology and Applications Vol. 3860, 55 (1999).

[14] S. Foster et al., « Ultra thin fiber laser hydrophone research trough government-industry collaboration » OFS 2005-2006 (?).

[15] A. Brignon, G. Feugnet, J.-P. Huignard, and J.-P. Pocholle, "Efficient degenerate four-wave mixing in a diode-pumped microchip Nd:YVO4 amplifier", Opt. Lett. Vol. 20, No. 6, 548-550 (1995).

[16] P. Yeh, « Two-wave mixing in nonlinear média », IEEE. J. Quantum Electr. Vol. 25, No. 3, 484-518 (1989).

[17] S.T. Fisken, « Transient Bragg Reflection gratings in erbium-doped fiber ampfifiers »,Opt. Lett. Vol. 17, No. 24, 1776-1778 (1992).

[18] B. Fischer, J.L. Zyskind, J.W. Sulhoff and D.J. DiGiovanni, « Nonlinear wave mixing and induced gratings in erbium-doped fiber amplifiers » , Opt. Lett. Vol. 18, No. 24, 2108-2110 (1993).

[19] Brevet US 6885784

[20] Brevet US 5361130

[21] Brevet US 6888125

**Revendications**

1. Capteur de grandeurs physiques dynamique à guide d'ondes optique à milieu amplificateur pompé optiquement, **caractérisé en ce que** ce guide d'ondes (1, 4, 13.1 à 13.N, 15) est relié à une extrémité à un miroir sélectif (3, 17) et qu'il comporte à son autre extrémité un laser d'interrogation (6) dont la réflexion sur le miroir sélectif produit une onde qui, par interférence avec l'onde incidente, provoque la saturation périodique du gain du guide.

2. Capteur selon la revendication 1, **caractérisé en ce que** le guide d'ondes est une fibre optique dopée par des ions de terres rares.

3. Capteur selon la revendication 1, **caractérisé en ce que** le guide d'ondes est un guide amplificateur du type EDWA.

**4.** Capteur de grandeurs physiques, **caractérisé en ce qu'**il comprend plusieurs capteurs selon l'une des revendications précédentes (13. à 13.n) disposés en série le long d'une fibre optique (14).

**5.** Capteur selon la revendication 4, **caractérisé en ce qu'**il est utilisé en hydrophone.

**6.** Procédé de réalisation d'un capteur de grandeurs physiques à l'aide d'un guide d'ondes à milieu amplificateur pompé optiquement, **caractérisé en ce qu'**on y forme un réseau dynamique de gain en y mélangeant deux ondes de mêmes fréquence et état de polarisation et cohérentes entre elles, et en saturant son gain.

**7.** Procédé selon la revendication 6, **caractérisé en ce que** l'on dispose en sérié plusieurs guides d'ondes et qu'on leur envoie une onde laser d'interrogation multiplexée.

**Patentansprüche**

**1.** Dynamischer Sensor für physikalische Größen mit einem Lichtwellenleiter mit optisch gepumptem Verstärkermedium, **dadurch gekennzeichnet, dass** dieser Wellenleiter (1, 4, 13.1 bis 13.N, 15) an einem Ende mit einem selektiven Spiegel (3, 17) verbunden ist und an seinem anderen Ende einen Abfragelaser (6) umfasst, dessen Reflexion auf dem selektiven Spiegel eine Welle erzeugt, die, durch Interferenz mit der Einfallswelle, eine periodische Sättigung des Gewinns des Leiters hervorruft.

**2.** Sensor nach Anspruch 1, **dadurch gekennzeichnet, dass** der Wellenleiter eine mit Seltenerdionen dotierte optische Faser ist.

**3.** Sensor nach Anspruch 1, **dadurch gekennzeichnet, dass** der Wellenleiter ein verstärkender Leiter des EDWA-Typs ist.

**4.** Sensor für physikalische Größen, **dadurch gekennzeichnet, dass** er mehrere Sensoren (13 bis 13.n) nach einem der vorherigen Ansprüche umfasst, die in Serie entlang einer optischen Faser (14) angeordnet sind.

**5.** Sensor nach Anspruch 4, **dadurch gekennzeichnet, dass** er in einem Hydrophon eingesetzt wird.

**6.** Verfahren zum Realisieren eines Sensors für physikalische Größen mit Hilfe eines Wellenleiters mit optisch gepumptem Verstärkermedium, **dadurch gekennzeichnet, dass** darin ein dynamisches Verstärkungsnetzwerk gebildet wird, in dem zwei zueinander kohärente Wellen mit der-/demselben Frequenz und Polarisationszustand gemischt und ihr Gewinn gesättigt wird.

**7.** Verfahren nach Anspruch 6, **dadurch gekennzeichnet, dass** mehrere Wellenleiter in Serie angeordnet und mit einer multiplexierten Abfragelaserwelle gespeist werden.

**Claims**

**1.** Dynamic physical value sensor having an optical waveguide with an optically pumped amplification medium, **characterised in that** the waveguide (1, 4, 13.1 to 13.N, 15) is connected at one end to a selective mirror (3, 17) and that it comprises at its other end an interrogation laser (6) whose reflection on the selective mirror produces a wave which, by means of interference with the incident wave, brings about the periodic saturation of the gain of the guide.

**2.** Sensor according to claim 1, **characterised in that** the waveguide is an optical fibre which is doped with rare earth ions.

**3.** Sensor according to claim 1, **characterised in that** the waveguide is an amplifying guide of the EDWA type.

**4.** Physical value sensor, **characterised in that** it comprises a plurality of sensors (13 to 13.n) according to any one of the preceding claims, arranged in series along an optical fibre (14).

**5.** Sensor according to claim 4, **characterised in that** it is used in a hydrophone.

6. Method for producing a physical value sensor using a waveguide with an optically pumped amplification medium, **characterised in that** there is formed therein a dynamic gain network by mixing two waves which are of the same frequency and polarisation state and which are mutually coherent, and by saturating the gain thereof.

7. Method according to claim 6, **characterised in that** a plurality of waveguides are arranged in series and a multiplexed interrogation laser wave is transmitted to them.

Création d'un réseau dynamique de gain
par mélange d'ondes par saturation du gain

FIG.1

*Pompage optique*

5

Fibre optique dopée — 4

**a) Création de l'inversion de population**

N2 ●●●●●●●●●●●●●●●●●●●●●●●●●

N1 ——●————●————●————●——

*Pompage optique*

5

4

$\nu_1$ Onde 1 →

$\nu_1$ ← Onde 1'

**b) Modulation du gain par deux ondes optiques cohérentes**

Réseau de gain

N2 ●●●●—●—●●●●●—●—●●●●●

N1 —●—●●●●●———●●●●●—●—

réseau d'intensité

*Pompage optique*

5

4

◄— Onde 1'

Onde 1 →

Onde 2 ←

**c) Diffraction des ondes sur le réseau de gain**

# FIG.2

Laser de pompage
optique ---12

6
Laser
d'interrogation

onde 1

8

onde 2i

Multiplexeur

onde 2i

onde 1

9

13.1
Capteur à DFB
dynamique
1

onde 2i

onde 1

onde 1

14

13.n
Capteur à DFB
dynamique
n

11

onde 2i

$\Delta v_i = v_{2i}(\varepsilon) - v_1$

FIG. 3

Réseau de Bragg fixe
faible réflectivité

16

$v_{1i}$

$v_{2i}$

15

DFB dynamique
18

Réseau de Bragg fixe
Miroir de fond de cavité
17

FIG.4

## RÉFÉRENCES CITÉES DANS LA DESCRIPTION

**Documents brevets cités dans la description**

- US 5844927 A
- US 6885784 B
- US 5361130 A
- US 6888125 B

**Littérature non-brevet citée dans la description**

- **C. MENADIER ; C.KISSENGER ; H. ADKINS.** The photonic sensor. *Instrum. Control Syst.,* 1967, vol. 40, 114
- **B. CULSHAW.** Optical fiber sensor technologies : opportunities and-perhaps-pitfalls. *J. Ligth. Tech.,* 2004, vol. 22 (1), 39
- **V. VALI ; R. W. SHORTHILL.** Fiber ring interferometer. *Appl. Opt.,* 1976, vol. 15 (5), 1099
- **P. NASH.** Review of interferometric optical fiber hydrophone technology. *IEE Proc. Radar Sonar Navig,* 1996, vol. 143 (3
- **L. THÉVENAZ et al.** Monitoring of large structures using distributed Brillouin fiber sensing. *proceedings of the 13th international conf on optical fiber sensors (OFS-13), Korea, SPIE,* 1999, vol. 3746, 345
- **S.W. JAMES et al.** Simultaneous independent temperature and strain measurement using in-fiber Bragg grating sensors. *Elect. Lett.,* 1996, vol. 32 (12), 1133
- **A. D. KERSEY et al.** Fiber Grating Sensors. *J. Light. Techn.,* 1997, vol. 15 (8
- **D.J. HILL et al.** DFB fibre-laser sensor developments. *OFS-17 Proc. SPIE,* vol. 5855, 904
- **C. SUN et al.** Serially multiplexed dual-point fiber-optic acoustic emission sensor. *J. Light. Techn.,* 2004, vol. 22 (2
- **S. ABAD et al.** Interrogation of wavelength multiplexed fiber bragg gratings using spectrale filtering and amplitude-to-phase optical conversion. *J. of Ligth. Techn.,* 2003, vol. 21 (1
- **P.E. BAGNOLI et al.** Development of an erbium-doped fibre laser as a deep-sea hydrophone. *J. of Optics A : Pure Appl. Opt.,* 2006, 8
- **D.J. HILL et al.** A fiber laser hydroplione array. *SPIE Conf on Fiber Optic Sensor Technology and Applications,* 1999, vol. 3860, 55
- **S. FOSTER et al.** Ultra thin fiber laser hydrophone research trough government-industry collaboration. *OFS 2005-2006 (?),* 2005
- **A. BRIGNON ; G. FEUGNET ; J.-P. HUIGNARD ; J.-P. POCHOLLE.** Efficient degenerate four-wave mixing in a diode-pumped microchip Nd:YVO4 amplifier. *Opt. Lett.,* 1995, vol. 20 (6), 548-550
- **P. YEH.** Two-wave mixing in nonlinear média. *IEEE. J. Quantum Electr.,* 1989, vol. 25 (3), 484-518
- **S.T. FISKEN.** Transient Bragg Reflection gratings in erbium-doped fiber ampfifiers. *Opt. Lett.,* 1992, vol. 17 (24), 1776-1778
- **B. FISCHER ; J.L. ZYSKIND ; J.W. SULHOFF ; D.J. DIGIOVANNI.** Nonlinear wave mixing and induced gratings in erbium-doped fiber amplifiers. *Opt. Lett.,* 1993, vol. 18 (24), 2108-2110